# EUROPÄISCHE PATENTSCHRIFT

(11) **EP 1 461 979 B1**
(45) Veröffentlichungstag und Bekanntmachung des Hinweises auf die Patenterteilung: **31.12.2008**
(21) Anmeldenummer: 03702308.2
(22) Anmeldetag: 03.01.2003
(51) Int. Cl.: H05B 33/00, H05B 35/00, F21V 5/00, H01J 61/32, H01J 61/38

(54) **LAMPE**
LAMP
LAMPE

(30) Priorität: 07.01.2002 DE 10200304
(43) Veröffentlichungstag der Anmeldung: 29.09.2004
(73) Patentinhaber: Patent-Treuhand-Gesellschaft für elektrische Glühlampen mbH, 81543 München (DE); Hofmann, Harald, 58515 Lüdenscheid (DE)
(72) Erfinder: HOFMANN, Harald, 58515 Lüdenscheid (DE); HILSCHER, Achim, 86316 Friedberg - Stätzling (DE); NOLL, Thomas, 85110 Kipfenberg (DE); ZACHAU, Martin, 82269 Geltendorf (DE)
(74) Vertreter: Pokorny, Gerd
(86) Internationale Anmeldenummer: PCT/DE2003/000007
(87) Internationale Veröffentlichungsnummer: WO 2003/059012

(56) Entgegenhaltungen:
- EP-A- 0 876 085
- EP-A- 0 978 683
- WO-A-02/097324
- DE-A- 19 829 270
- FR-A- 2 571 728
- GB-A- 2 282 877
- US-A- 5 581 683
- US-A1- 2001 048 603
- PATENT ABSTRACTS OF JAPAN vol. 2000, no. 02, 29. Februar 2000 (2000-02-29) & JP 11 306824 A (ELNA CO LTD;ELNA COMPONENTS KK), 5. November 1999 (1999-11-05)

## Beschreibung

### Technisches Gebiet

Die Erfindung betrifft eine Lampe, die einseitig oder zweiseitig gesockelt ist und ein an dem wenigstens einen Sockel angeordnetes Kolbenelement umfasst, welches ein Raumvolumen im wesentlichen umhüllt. Der Lampe ist wenigstens ein LED-Element (light emitting diode) zugeordnet.

### Stand der Technik

Eine derartige Lampe ist aus der DE 198 29 270 A1 bekannt. Die dort beschriebene Lampe umfasst wenigstens zwei Teillampen unterschiedlicher Farbtemperatur, wobei die Gesamtfarbtemperatur der Lampe änderbar ist. Eine der Teillampen ist als LED ausgebildet.

Bei Anordnung von LED's in einer Lampe muss berücksichtigt werden, dass LED's üblicherweise gerichtetes Licht ausstrahlen. Zur Erzielung einer homogenen Leuchtdichteverteilung des von der Lampe ausgesandten LED-Lichts bedarf es einer besonderen Anordnung der LED-Elemente. Ziel ist die weitgehende Vermeidung einer Auflösung in Lichtquellenstrukturen für einen Betrachter. Bei einer Lampe mit zwei Teillampen unterschiedlicher Farbtemperatur spielen darüber hinaus Abschattungsprobleme eine besondere Rolle.

### Darstellung der Erfindung

Der Erfindung liegt die Aufgabe zu Grunde, eine wenigstens ein LED-Element aufweisende Lampe derart weiterzuentwickeln, dass eine homogene Leuchtdichteverteilung des von der Lampe ausgesandten LED-Lichtes erreicht wird.

Die Erfindung löst die Aufgabe dadurch, dass eine Einstrahlung des LED-Lichtes in das Kolbenelement hinein erfolgt und auf Grund von Reflexion, insbesondere Totalreflexion, an Begrenzungsflächen des Kolbenelementes eine Weiterleitung des LED-Lichtes innerhalb des Kolbenelementes stattfindet.

Das Prinzip der Erfindung besteht somit im wesentlichen darin, das von einem oder mehreren LED-Elementen ausgesandte Licht unmittelbar in das Kolbenelement einzukoppeln und das Kolbenelement als Lichtleit- und/oder Lichtlenkelement zu verwenden. Auf diese Weise kann das gesamte Kolbenelement weitgehend gleichmäßig mit LED-Licht versorgt bzw. von LED-Licht durchflossen werden. Durch Anordnung und Ausbildung entsprechender Begrenzungsflächen und durch eine entsprechend gewählte Form des Kolbenelementes kann dafür gesorgt werden, dass das LED-Licht weitgehend gleichmäßig aus dem Kolbenelement heraustritt und die Lampe auf diese Weise verlässt.

Erfindungsgemäß kann eine Auflösung in Lichtquellenstrukturen vermieden werden. Außerdem kann, insbesondere für den Fall, dass innerhalb des Raumvolumens eine Teillampe zweiter Art angeordnet wird, eine von dem wenigstens einen LED-Element und der Teillampe zweiter Art gemeinsam erzeugte Gesamtlichtverteilung erreicht werden, die keine Abschattungsprobleme aufwirft. Das LED-Element und die Teillampe zweiter Art erzeugen vorteilhafterweise eine identische Leuchtdichteverteilung.

Bei einer alternativen Ausgestaltung der Erfindung kann eine Teillampe zweiter Art selbstverständlich auch außerhalb des Raumvolumens angeordnet werden. Bei dieser Ausgestaltung befindet sich das Kolbenelement beispielsweise zwischen zwei Schenkeln von Teillampen zweiter Art, so dass z.B. auch eine rotationssymmetrische Anordnung, jedenfalls aber eine homogene Gesamtlichtverteilung ohne Abschattungsprobleme möglich wird.

Bei der erfindungsgemäßen Lampe ist es möglich, ausschließlich gekrümmte also weitestgehend kantenlose Begrenzungsflächen des Kolbenelementes vorzusehen, so dass ein überwiegend kontinuierlicher Verlauf der Lichtstärkeverteilung möglich wird.

Als LED-Licht wird üblicherweise die von einem LED-Element ausgesandte elektromagnetische Strahlung im sichtbaren Wellenlängenbereich verstanden. Im Sinne der vorliegenden Erfindung beinhaltet der Begriff LED-Licht jedoch auch von dem LED-Element ausgesandte Strahlung im nicht sichtbaren Wellenlängenbereich, beispielsweise also auch UV-Strahlung.

Die Formulierung, wonach vorgesehen ist, dass das Kolbenelement ein Raumvolumen im wesentlichen umhüllt, schließt selbstverständlich Ausführungsbeispiele mit ein, die Öffnungen am Kolbenelement aufweisen. Beispielsweise kann es sich hierbei um Entlüftungsöffnungen handeln, die das Passieren eines kühlenden Luftstromes durch das Kolbenelement hindurch ermöglichen. Für den Fall, dass derartige Öffnungen im Kolbenelement vorgesehen sind, können besondere weitere Maßnahmen zur Weiterleitung des LED-Lichtes innerhalb des Kolbenelementes vorgesehen werden.

Ein Kolbenelement an sich ist bei Lampen des Standes der Technik bekannt und weit verbreitet. Das Kolbenelement dient beim Stand der Technik grundsätzlich beispielsweise dazu, ein bestimmtes Gas in einem Raumvolumen zu halten. Andererseits kann durch die feste Verbindung des Kolbenelementes mit dem wenigstens einen Sockel ein geschlossener Hohlraum erreicht werden, in dem ein anderer Druck herrscht als außerhalb der Lampe. Neben dieser Funktion ist es im Stand der Technik außerdem bereits bekannt, ein Kolbenelement als Diffusor zu verwenden.

Erfindungsgemäß wird dem Kolbenelement nunmehr die Funktion eines Lichtleiters für das von dem wenigstens einen LED-Element ausgesandte Licht zugeordnet. Dies ermöglicht ein gezieltes Leiten des LED-Lichtstromes derart, dass praktisch die gesamte äußere Begrenzungsfläche des Kolbenelementes als Lichtaustrittsfläche für ein weitgehend gleichmäßiges Austreten des LED-Lichtes aus dem Kolbenelement heraus fungieren kann.

Die herkömmlichen, bekannten Funktionen des Kolbenelementes im Sinne eines Diffusors bzw. im Sinne einer Druckkammerwand oder Gaskammerwand müssen dabei nicht aufgegeben werden, sondern können, falls gewünscht, zusätzlich mit übernommen werden.

Vorteilhaft ist in diesem Zusammenhang, wenn gemäß einer Ausgestaltung der Erfindung das Raumvolumen von dem Kolbenelement und dem wenigstens einen Sockel gemeinsam vollständig umschlossen ist. Auf diese Weise kann innerhalb des Raumvolumens ein anderer Druck als im Außenraum der Lampe herrschen und/oder das Raumvolumen mit einem Gas gefüllt werden.

Gemäß einer weiteren vorteilhaften Ausgestaltung der Erfindung ist das wenigstens eine LED-Element in dem wenigstens einen Sockel der Lampe angeordnet. Dies ermöglicht eine besonders einfache Unterbringung der LED-Elemente.

Gemäß einer weiteren vorteilhaften Ausgestaltung der Erfindung sind mehrere LED-Elemente im Bereich des Randes des Sockels angeordnet. Auch dies ermöglicht eine einfache Unterbringung der LED-Elemente. Außerdem ist diese Anordnung bezüglich einer Temperaturverteilung günstig, besonders wenn eine Teillampe zweiter Art in der Lampe angeordnet ist. Insbesondere ist auf diese Weise ein gleichzeitiger Betrieb unterschiedlicher Teillampen mit höchstens geringer gegenseitiger Temperaturbeeinflussung möglich.

Der Sockel eines LED-Elementes erhitzt sich verhältnismäßig stark. Insbesondere bei einer als Kompakt-Leuchtstofflampe ausgebildeten Teillampe zweiter Art kommt es im Bereich der Anbindung dieser Teillampe an den Sockel ebenfalls zu verhältnismäßig hohen Temperaturen. Durch Anordnung des LED-Elementes bzw. der LED-Elemente im Bereich des äußeren Randes des Sockels und durch Anordnung der Teillampe zweiter Art etwa mittig am Sockel der Lampe wird ein maximaler Abstand zwischen dem Anordnungsbereich der LED-Elemente und dem Anbindungsbereich der Teillampe zweiter Art erreicht. Durch diesen großen Abstand können gegenseitige Temperaturbeeinflussungen maximal reduziert werden, so dass ein Parallelbetrieb beider Teillampen möglich ist. Eine Wärmeabfuhr der von den LED-Elementen erzeugten Wärme an die Außenseite des Sockels kann nahezu ohne störende Beeinflussung durch die Kompaktleuchtstofflampe erfolgen.

Gemäß einer weiteren vorteilhaften Ausgestaltung der Erfindung ist das wenigstens eine LED-Element nahe dem Befestigungsbereich des Kolbenelementes an dem wenigstens einen Sockel angeordnet. Auf diese Weise kann eine unmittelbare Einkopplung des von dem wenigstens einen LED-Element ausgesandten LED-Lichtes unmittelbar in das Kolbenelement hinein bei nahezu verlustfreier Einkopplung erreicht werden.

Gemäß einer weiteren vorteilhaften Ausgestaltung der Erfindung ist in dem Raumvolumen eine Teillampe zweiter Art angeordnet. Dies ermöglicht die Ausbildung einer Lampe mit zwei Teillampen unterschiedlicher Farbtemperatur, wie sie in der DE 198 29 270 A1 beschrieben ist. Es ist insbesondere möglich, die LED-Elemente als Teillampen erster Art mit einer ersten Farbtemperatur vorzusehen und in dem umhüllten Raumvolumen wenigstens eine Teillampe zweiter Art mit einer anderen Farbtemperatur anzuordnen. Eine der beiden Teillampen oder Teillampengruppen kann dabei vorteilhafterweise dimmbar und/oder zuschaltbar bzw. ausschaltbar ausgebildet sein.

Insbesondere kann vorgesehen sein, die Teillampe zweiter Art als Hg-Leuchtstofflampe auszubilden. Eine Kombination solcher Hg-Leuchtstofflampen mit vorzugsweise mehreren roten LED-Elementen bietet dabei auch die Möglichkeit, weißes Licht mit Farbtemperaturen von weniger als 2.500 K zu erzeugen, also solches Licht, wie es auch beim Dimmen einer herkömmlichen Glühlampe erzeugt wird.

Derartige Hg-Leuchtstofflampen können eine beliebige Form besitzen und beispielsweise als Kompaktlampe oder Stablampe ausgebildet sein. Insbesondere können Kompakt-Leuchtstofflampen vorgesehen sein, deren Entladungsgefäß wenigstens ein insbesondere U-förmig gebogenes Teilstück umfasst, wie z.B. DULUX-T/E-Kompakt-Leuchtstofflampen sowie DULUX-S/E- oder DULUX L-Lampen von OSRAM.

Gemäß einer weiteren Ausgestaltung der Erfindung sind mehrere LED-Elemente vorgesehen, die in Umfangsrichtung verteilt an dem Sockel angeordnet sind. Dies ermöglicht das Erzielen einer hohen Lichtleistung des von den LED ausgesandten Lichtes, da viele LED-Elemente verhältnismäßig dicht gepackt angeordnet werden können.

Die Zahl der LED-Elemente ist praktisch nur durch die Dimension des Sockels begrenzt. Durch die im wesentlichen kreisringförmige Anordnung mehrerer LED-Elemente kann jedoch eine besonders dichte Anordnung gewählt werden, so dass ein großer Lichtstrom an LED-Licht in das Kolbenelement eingekoppelt werden kann.

Gemäß einer weiteren vorteilhaften Ausgestaltung der Erfindung umfassen die LED-Elemente unterschiedliche Farben. Auf diese Weise kann beispielsweise durch das selektive Dimmen der LED-Elemente ein Farbgang erzielt werden.

Gemäß einer weiteren vorteilhaften Ausgestaltung der Erfindung sind zusätzlich zu dem wenigstens einen LED-Element Teillampen zweiter Art vorgesehen, die im wesentlichen die gleiche Farbtemperatur besitzen wie die LED-Elemente. Eine derartige Kombination ist beispielsweise sinnvoll, um ein effizientes Not- oder Dauerlicht von geringerer Lichtleistung zu erzeugen und bei Bedarf die Teillampe zweiter Art, beispielsweise in Form einer kompakten Leuchtstofflampe, hinzuzuschalten, um so einen großen Lichtstrom zu erzeugen.

Gemäß einer weiteren vorteilhaften Ausgestaltung der Erfindung weist das Kolbenelement eine innere, dem Raumvolumen benachbarte Begrenzungsfläche und eine äußere, dem Außenraum benachbarte Begrenzungsfläche auf, wobei die innere und die äußere Begrenzungsfläche zumindest teilweise im Raum gekrümmt sind. Diese Ausgestaltung ermöglicht weitgehend kantenfreie Kolbenelemente, so dass grundsätzlich eine gleichmäßige Lichtaustrittsfläche für das Kolbenelement geschaffen werden kann.

Die Weiterleitung des LED-Lichtes innerhalb des Kolbenelementes entlang der Begrenzungsflächen erfolgt weitgehend durch Totalreflexion an den beiden Begrenzungsflächen. Lichtaustritt aus dem Kolbenelement wird im wesentlichen durch Störstellen bzw. durch eine entsprechende Oberflächenbearbeitung, beispielsweise Aufrauhung oder durch eine besondere Beschichtung der Begrenzungsflächen erreicht. Durch eine besondere Formgebung des Kolbenelementes oder durch eine Ausbildung oder Bearbeitung der Begrenzungsflächen kann dafür gesorgt werden, dass eine Störstellen-Erzeugung an den Begrenzungsflächen derart stattfindet, dass jeweils ein Teil des innerhalb des Kolbenelementes weitergeleiteten LED-Lichtes auf seinem Weg durch das Kolbenelement hindurch an den Störstellen gestreut wird und aus dem Kolbenelement austritt, wobei jedoch der weitaus größere Teil des LED-Lichtes innerhalb des Kolbenelementes weitergeleitet wird.

Es könnte beispielsweise daran gedacht werden, Störstellen vorzusehen, deren Zahl mit zunehmender Entfernung von dem LED-Element zunimmt. Alternativ könnte auch durch eine unterschiedlich starke Oberflächenbearbeitung der äußeren Begrenzungsfläche in Abhängigkeit von dem Abstand zu dem LED-Element eine entsprechende Lichtverteilung erreicht werden.

Gemäß einer weiteren vorteilhaften Ausgestaltung der Erfindung ist zusätzlich zu dem Kolbenelement ein Diffusorelement vorgesehen. Das Diffusorelement kann dabei ebenfalls kolbenförmig ausgebildet sein und das Kolbenelement beispielsweise umhüllen. Ein derartiges Diffusorelement trägt zu einer weiteren Homogenisierung des LED-Lichtes bei.

Gemäß einer vorteilhaften Ausgestaltung der Erfindung ist das Kolbenelement massiv und weist eine im wesentlichen konstante Wandstärke zwischen innerer und äußerer Begrenzungsfläche auf. Die Störstellen können hier im Kolbenelement selbst angeordnet sein, z.B. durch Einfügen von gezielten Verunreinigungen, oder durch Einarbeitung von Kerben.

Alternativ ist vorgesehen, die Wandstärke des Kolbenelementes, insbesondere in Abhängigkeit vom Abstand zu den LED-Elementen zu variieren.

Gemäß einer weiteren vorteilhaften Ausgestaltung der Erfindung ist das Kolbenelement insgesamt hohl ausgebildet, wobei zwei gesonderte Konstruktionselemente die innere Begrenzungsfläche und die äußere Begrenzungsfläche bilden, und eine Totalreflexion an der inneren bzw. an der äußeren Begrenzungsflächen stattfindet. Zwischen den beiden Begrenzungsflächen kann sich Vakuum oder eine Gasfüllung befinden.

Gemäß einer vorteilhaften Ausgestaltung der Erfindung ist die innere und/oder äußere Begrenzungsfläche des Kolbenelementes mit einer Leuchtstoffschicht versehen, die von dem LED-Licht, insbesondere von LED-Strahlung, die im kurzwelligen UV-Bereich liegt, angeregt wird.

Gemäß einer weiteren vorteilhaften Ausgestaltung der Erfindung weist die Lampe wenigstens einen Sockel üblicher Bauform im Sinne der DE 198 29 270 A1 auf. Dies bietet insbesondere Vorteile bei einem Anschluss der erfindungsgemäßen Lampe an herkömmliche Leuchten.

Gemäß einer vorteilhaften Ausgestaltung der Erfindung besteht das Kolbenelement aus Kunststoff. Diese Ausgestaltung bietet die Möglichkeit, dass Streukörper in eine Kunststoff-Granulatmasse, aus der das Kolbenelement hergestellt wird, eingebracht werden können. Das insbesondere als Kurtststoff-Spritzgußteil gefertigte Kolbenelement kann auf diese Weise mit besonders homogen verteilten Streukörpern versehen werden. Der Herstellungsaufwand ist dabei gering. Die Streukörper können dem Kunststoff-Granulat entweder beigemischt werden oder integraler Bestandteil des Granulates sein.

Die Streukörper können auch aus Leuchtstoff bestehen.

### Kurze Beschreibung der Zeichnungen

In den Zeichnungen zeigen:
- Fig. 1: schematisch in teilgeschnittener Ansicht ein erstes Ausführungsbeispiel einer erfindungsgemäßen Lampe herkömmlicher, birnenförmiger Grundform,
- Fig. 2: schematisch in abgebrochener Schnittdarstellung den einen Endbereich eines zweiten Ausführungsbeispiels einer erfindungsgemäßen Lampe in Form einer zweiseitig gesockelten Lampe mit zwei Arten von Teillampen,
- Fig. 3: schematisch ein drittes Ausführungsbeispiel der Erfindung in Form einer zwei Arten von Teillampen aufweisenden einseitig gesockelten Lampe, und
- Fig. 4: ein viertes Ausführungsbeispiel der Erfindung in einer Darstellung gemäß Fig. 3.

### Bevorzugte Ausführung der Erfindung

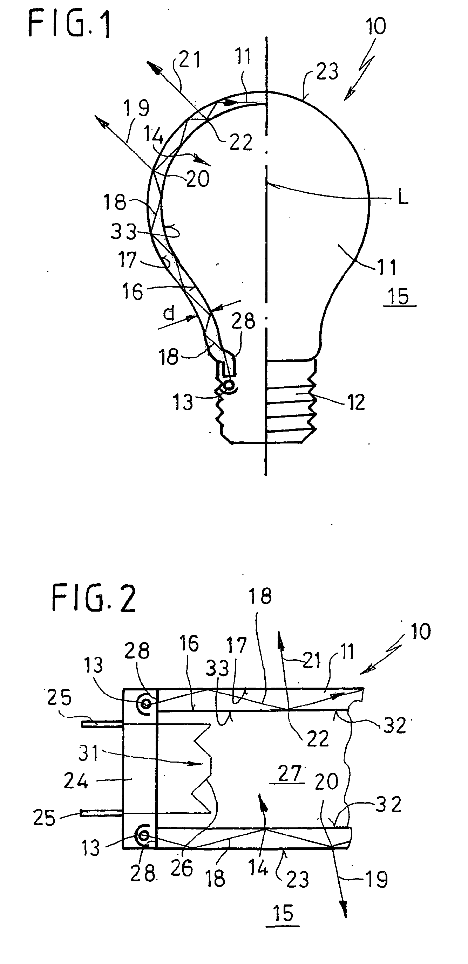

Fig. 1 zeigt eine in ihrer Gesamtheit mit 10 bezeichnete Lampe, die ein Kolbenelement 11 herkömmlicher, birnenförmiger oder tropfenförmiger Grundform aufweist. Das Kolbenelement 11 ist an einem Sockel 12 befestigt, der als Schraubsockel ausgebildet ist und der mechanischen Halterung und einem elektrischen Anschluss an eine nicht dargestellte leuchtenseitige Fassung dient.

Das Kolbenelement 11 umhüllt ein Raumvolumen 14, welches beispielsweise evakuiert aber auch alternativ mit einer Gasfüllung versehen sein kann. Es ist möglich, in dem Raumvolumen 14 oder auch außerhalb des Raumvolumens 14 eine Teillampe zweiter Art anzuordnen. Prinzipiell ist es auch möglich, dass zwischen dem Raumvolumen 14 und dem Außenraum der Lampe 15 eine unmittelbare Verbindung besteht, wobei das Kolbenelement 11 und/oder der Sockel 12 Luftdurchtrittsöffnungen aufweisen.

Das Kolbenelement 11 besteht bei sämtlichen in den Figuren dargestellten Ausführungsbeispielen aus einem lichtleitenden Material, beispielsweise aus Glas oder Kunststoff. Es weist eine innere Begrenzungsfläche 16 und eine äußere Begrenzungsfläche 17 auf. Die innere Begrenzungsfläche 16 stellt die dem Kolbenelement 11 zugewandte Seite der Grenzschicht zwischen dem Kolbenelement 11 und dem Raumelement 14 und die äußere Begrenzungsfläche 17 die dem Kolbenelement 11 zugewandte Seite der Grenzschicht zwischen dem Kolbenelement 11 und dem Außenraum 15 dar.

Das in den Ausführungsbeispielen aus Vollmaterial bestehende Kolbenelement 11 kann alternativ auch aus zwei gesonderten Elementen derart bestehen, dass die innere Begrenzungsfläche 16 von einem ersten und die äußere Begrenzungsfläche 17 von einem zweiten Element bereitgestellt wird. Zwischen den beiden Begrenzungsflächen kann dann ein luftleerer oder gasgefüllter Raum vorhanden sein, durch den das Diodenlicht hindurchpropagiert.

Beim Ausführungsbeispiel gemäß Fig. 1 ist der Übersichtlichkeit halber lediglich ein LED-Element 13 im Bereich des Sockels 12 dargestellt. Vorzugsweise sind mehrere LED-Elemente 13 gleichmäßig um den Umfang verteilt im Bereich des im Querschnitt im wesentlichen kreisförmigen Sockels 12 um die Längsachse L der Lampe 10 herum angeordnet, so dass eine im wesentlichen kreisringförmige Anordnung von LED-Elementen entsteht.

Gemäß Fig. 1 strahlt das LED-Element 13 das LED-Licht entlang dem Pfeilzug 18 unmittelbar von unten her in den Randbereich 28 des Kolbenelementes 11 ein. Im Bereich der Einstrahlung muss selbstverständlich darauf geachtet werden, dass es hier zu möglichst geringen Einstrahlverlusten kommt, so dass ein Maximum des LED-Lichtes 18 für eine gleichmäßige Beleuchtung des Außenraumes 15 der Lampe zur Verfügung steht.

Das LED-Licht breitet sich entlang dem Pfeilzug 18 in dem Kolbenelement 11 aus. An den inneren und äußeren Begrenzungsflächen 16, 17 kommt es zur Totalreflexion. Der Pfeilzug 18 soll lediglich schematisch den Weg des Diodenlichtes veranschaulichen. Tatsächlich kommt es zu einer Überlagerung einer nahezu unendlich großen Zahl unterschiedlicher Pfeilzüge 18.

Im Bereich 20 der äußeren Begrenzungsfläche 17 ist die äußere Begrenzungsfläche 17 auf besondere Weise ausgebildet. Beispielsweise kann hier eine Oberflächenbearbeitung der Außenseite 23 oder ein besonderer Verlauf der äußeren Begrenzungsfläche 17 erreicht werden, so dass es hier zu einem Lichtaustritt des LED-Lichtes 18 aus dem Kolbenelement 11 heraus in den Außenraum 15 kommt. Dies soll durch den Pfeil 19 angedeutet werden. Alternativ kann an statt einer Oberflächenbearbeitung auch eine besondere Beschichtung der Außenseite 23 erfolgen, z.B. auch mit Leuchtstoffen, die kurzwellige LED-Strahlung in sichtbares LED-Licht umwandeln. Schließlich ist es auch möglich, durch eine entsprechende Formgebung des Kolbenelementes 11 selbst einen entsprechenden Lichtaustritt zu erreichen.

In entsprechender Weise kann auch die innere Begrenzungsfläche 16, wie dies beispielsweise durch den Bereich 22 angedeutet ist, ausgebildet sein, so dass ein Teil des LED-Lichtes hier nicht einer Totalreflexion an der inneren Begrenzungsfläche 16 und einer Lichtweiterleitung unterliegt, sondern etwa entlang dem angedeuteten Pfeil 21 aus dem Kolbenelement 11 heraus in den Außenraum 15 tritt.

Die Begrenzungsflächen 16, 17 sind dabei vorzugsweise über ihre gesamte Erstreckung derart ausgebildet, dass das gesamte in das Kolbenelement 11 eingespeiste LED-Licht sämtlicher LED-Elemente 13 gleichmäßig oder zumindestens weitgehend gleichmäßig aus dem Kolbenelement 11 austritt. Auf diese Weise wird das Kolbenelement 11 von einem Betrachter als eine weitgehend homogene Lichtquelle wahrgenommen, ohne dass die einzelnen LED-Elemente erkennbar sind.

An dieser Stelle wird insbesondere darauf hingewiesen, dass die erfindungsgemäße Ausbildung der Begrenzungsflächen 16, 17 beispielsweise durch besondere Beschichtungen, oder aber auch durch Bearbeitungen, beispielsweise durch ein Aufrauhen des Materials des Kolbenelementes 11 erreicht werden kann. Die dem Raumvolumen 14 zugewandte Innenseite 33 des Kolbenelementes 11 ist von dem Raumvolumen 14 her zugänglich, so dass das fertig hergestellte Kolbenelement 11 zur Beeinflussung der inneren Begrenzungsfläche 16 noch bearbeitet werden kann. Noch einfacher zu bearbeiten sind die völlig frei zugänglichen Außenseiten 23 der äußeren Begrenzungsflächen 17, die ebenfalls beschichtet oder bearbeitet werden können.

Der oben beschriebene Lichtaustritt entsprechend der Pfeile 19 und 21 soll lediglich schematisch den Lichtweg veranschaulichen. Tatsächlich kommt ein Lichtaustritt aus dem Kolbenelement 11 im Bereich solcher Bereiche 20, 22 zustande, in denen Störstellen der Begrenzungsflächen 16, 17 oder störstellenartige Einschlüsse im Kolbenelement 11 vorliegen. Um eine möglichst homogene Lichtverteilung des LED-Lichtes 18 über den gesamten Kolben 11 zu erreichen, sind derartige, Störstellen enthaltende Bereiche 20, 22 selbstverständlich nicht nur punktuell über das Kolbenelement 11 verteilt, sondern überziehen dieses nahezu vollständig. Lediglich durch die Dichte der Störstellen bzw. durch deren Ausbildung gelingt es, eine über die gesamte Erstreckung des Kolbenelementes 11 weitestgehend homogene Lichtverteilung des LED-Lichtes 18 zu erreichen.

Letztendlich ist es auch denkbar, wenn auch aufwendiger, die gewünschte, gleichmäßige Lichtausstrahlung des LED-Lichtes 18 aus dem Kolbenelement 11 heraus durch eine besondere Formgebung des Kolbenelementes 11 zu erreichen. Beispielsweise kann die Dicke d des Kolbenelementes 11, also die Wandstärke des Kolbenelementes 11 oder mit anderen Worten der Abstand zwischen der inneren Begrenzungsfläche 16 und der äußeren Begrenzungsfläche 17, die bei dem Ausführungsbeispiel gemäß Fig. 1 konstant ist, über die Gesamterstreckung der Begrenzungsflächen 16, 17 variiert werden.

Fig. 2 zeigt ein zweites Ausführungsbeispiel einer erfindungsgemäßen Lampe 10, die zweiseitig gesockelt ist. Sie besitzt somit die Form herkömmlicher Leuchtstofflampen.

An dieser Stelle sei darauf hingewiesen, dass gleiche, vergleichbare oder sich entsprechende Elemente bei den unterschiedlichen Ausführungsbeispielen der besseren Übersichtlichkeit halber mit gleichen Bezugszeichen bezeichnet werden.

Fig. 2 zeigt lediglich in abgebrochener Darstellung einen Endbereich dieser Lampe 10 mit einem Sockel 24 und entsprechenden Anschlußkontaktstiften 25. Ein identischer, nicht dargestellter Sockel 24 befindet sich bezüglich Fig. 2 am entgegengesetzten, rechten Ende der Lampe 10.

Die beiden Sockel 24 sind mit einem Kolbenelement 11 verbunden, welches herkömmlicher, hohlzylindrischer Grundform mit kreisförmigen Querschnitt ist. Bei herkömmlichen Leuchtstofflampen besteht das bekannte Kolbenelement üblicherweise aus Glas.

Dem Sockel 24 ist eine Glühwendel 26 zugeordnet. Auf der dem Innenraum 14 zugewandten Innenseite 33 des Kolbenelementes 11 ist hier eine nicht näher dargestellte Leuchtstoffschicht 32 angeordnet.

Die Glühwendel 26 mit den entsprechenden Anschlüssen, das Gas 27 und die Leuchtstoffschicht 32 bilden gemeinsam eine Teillampe 31 zweiter Art aus, auf die später noch eingegangen wird. Bei derartigen Leuchtstofflampen dient das Kolbenelement 11 üblicherweise lediglich als Schutzkolben bzw. für einen Zusammenhalt des Gases 27.

Bei der erfindungsgemäßen Lampe 10 gemäß Fig. 2 weist das Kolbenelement 11 analog zum Ausführungsbeispiel gemäß Fig. 1 eine innere Begrenzungsfläche 16 und eine äußere Begrenzungsfläche 17 auf. Das Kolbenelement 11 ist unmittelbar an dem Sockel 24 befestigt, so dass sich ein im wesentlichen kreisringförmiger Befestigungsbereich 28 ergibt. Am Sockel 24, nahe dem Befestigungsbereich 28, sind beim Ausführungsbeispiel gemäß Fig. 2 wiederum eine Vielzahl von LED-Elementen 13 angeordnet, die in Umfangsrichtung gleichmäßig voneinander beabstandet sind. Gemäß Fig. 2 sind lediglich zwei LED-Elemente 13 dargestellt, die das LED-Licht gemäß dem Pfeilzug 18 in das Kolbenelement 11 einspeisen. Die Anschlüsse für die LED-Elemente sind nicht dargestellt.

Innerhalb des Kolbenelementes 11 kommt es an den beiden Begrenzungsflächen 16, 17 wiederum zu einer Totalreflexion, so dass sich das LED-Licht 18 entlang der gesamten Erstreckung des Kolbenelementes 11 ausbreitet.

Analog zu dem Ausführungsbeispiel gemäß Fig. 1 kommt es gemäß den Pfeilen 19, 21 zu einem Austritt des LED-Lichtes 18 aus dem Kolbenelement 11 heraus in den Außenraum 15, was durch eine entsprechende Ausbildung der Begrenzungsflächen 16, 17 erreicht wird. Die Bearbeitung oder Beschichtung bzw. Ausbildung des Kolbenelementes 11 kann hierzu analog zu der bezüglich Fig. 1 beschriebenen Weise vorgenommen werden.

Das Ausführungsbeispiel gemäß Fig. 2 weist somit Teillampen erster Art auf, nämlich die Gruppe der LED-Elemente 13. Darüber hinaus ist eine Teillampe 31 zweiter Art vorgesehen, die einer herkömmlichen Leuchtstofflampe zumindest sehr stark ähnelt.

Vorteilhafterweise sind die beiden unterschiedlichen Teillampen 13 erster Art und Teillampen 31 zweiter Art separat voneinander ansteuerbar. Für den Fall, dass wie gemäß Fig. 2 vorgesehen, die Gruppe der Teillampen 13 erster Art aus mehreren Einzelelementen (LED-Elementen 13) besteht, kann es auch möglich sein, die einzelnen Elemente separat voneinander anzusteuern.

Beispielsweise ist es vorstellbar, dass einzelne Teillampen während des Betriebs der jeweiligen anderen Teillampe hinzu- oder abschaltbar sind oder dass wenigstens eine der beiden Teillampen unterschiedlicher Gruppen dimmbar ausgebildet ist. Auf diese Weise kann z.B. ein effizientes Not- oder Dauerlicht einer Lampe von geringer Energieleistung möglich werden, dass ausschließlich von LED-Elementen 13 bereitgestellt wird. Andererseits kann auf diese Weise auch eine Gesamt-Farbtemperatur-Änderung zu den in der DE 198 29 270 A1 beschriebenen Zwecken erreicht werden.

An dieser Stelle wird auch darauf hingewiesen, dass selbstverständlich in dem Raumvolumen 14 des ersten Ausführungsbeispiels gemäß Fig. 1 eine dort nicht dargestellte Teillampe 31 zweiter Art angeordnet werden kann. Die Art der Teillampe 31 zweiter Art ist dabei prinzipiell zunächst beliebig. Es kann sich dabei beispielsweise um eine Kompaktleuchtstofflampe handeln. Im übrigen sei angemerkt, dass das Kolbenelement 11 gemäß Ausführungsbeispiel nach Fig. 2 hier zugleich die Funktion eines Lichtleiters für das LED-Licht 18 wie auch die Funktion eines Schutzkolbens übernimmt. Grundsätzlich kann hier darüber hinaus noch ein separates Diffusorelement (welches nicht dargestellt ist) vorgesehen sein, das die gesamte Anordnung umhüllt. Schließlich ist auch denkbar, dass eine insbesondere konzentrische Anordnung zweier Kolbenelemente vorgesehen ist, wobei das eine Kolbenelement den Schutzkolben bildet und das andere Kolbenelement der Weiterleitung des LED-Lichtes 18 dient.

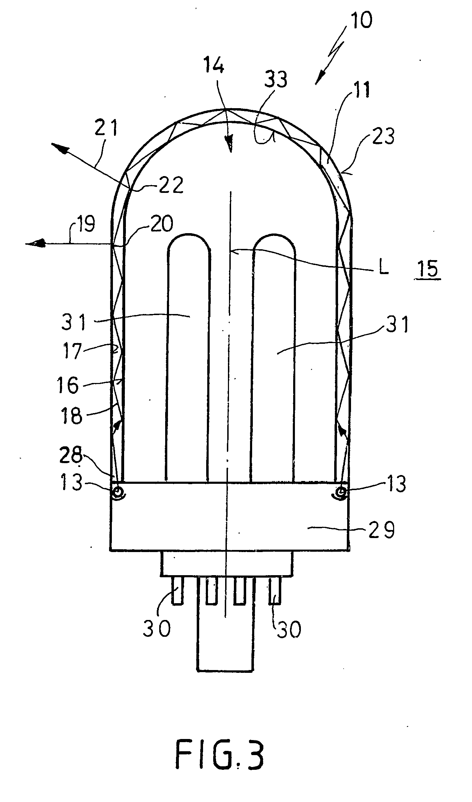

Fig. 3 zeigt ein drittes Ausführungsbeispiel der erfindungsgemäßen Lampe 10 mit einem im Querschnitt U-förmigen und bezüglich seiner Längsachse L rotations-symmetrischen Kolbenelement 11. Die Lampe 10 gemäß Fig. 3 ist wiederum nur einseitig mittels eines Sockels 29 gesockelt. Auch hier verfügt der Sockel 29 über entsprechende Anschlusselemente 30, die der mechanischen sowie elektrischen Kontaktierung mit einer nicht dargestellten leuchtenseitigen Fassung dienen. Die bezüglich der Fig. 1 und 2 gemachten Ausführungen beziehen sich gleichermaßen auch auf das Ausführungsbeispiel gemäß Fig. 3.

Analog zu dem Ausführungsbeispiel gemäß Fig. 2 sind in dem Raumvolumen 14 des geschlossenen und mit dem Sockel 29 fest verbundenen Kolbenelementes 11 Teillampen 31 zweiter Art angeordnet. LED-Elemente 13 sind wiederum im Sockel 29 angeordnet und in Umfangsrichtung verteilt voneinander beabstandet. Die LED-Elemente 13 und die beiden Teillampen 31 zweiter Art können, ähnlich wie beim Ausführungsbeispiel gemäß Fig. 2, eine unterschiedliche Farbtemperatur aufweisen. Auf diese Weise kann die in der DE 198 29 270 A1 beschriebene Aufgabe, eine Lampe mit zwei Teillampen unterschiedlicher Farbtemperatur zu schaffen, wobei die Gesamtfarbtemperatur der Lampe änderbar ist und eine Veränderung des Beleuchtungsniveaus der Farbtemperatur bewirkt, gleichermaßen vorteilhaft gelöst werden. Die LED-Elemente 13 als Teillampen erster Art und die Teillampen 31 zweiter Art, die beispielsweise als Kompaktieuchtstofflampe, aber auch als Hochdruck-Entladungslampe ausgebildet sein können, können aber auch gleiche Farbtemperaturen aufweisen. Wenigstens eine der beiden Teillampengruppen oder Teillampen 31, 13 ist vorzugsweise dimmbar und/oder zuschaltbar bzw. ausschaltbar.

Die Lichtausbreitung des LED-Lichtes 18 erfolgt beim Ausführungsbeispiel gemäß Fig. 3 analog zu der oben beschriebenen Lichtausbreitung.

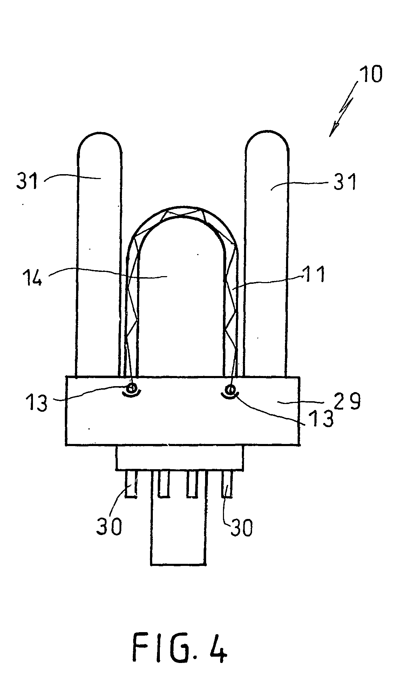

Das Ausführungsbeispiel gemäß Fig. 4 unterscheidet sich von dem Ausführungsbeispiel gemäß Fig. 3 im wesentlichen dadurch, dass hier das Kolbenelement 11, in welches LED-Licht eingestrahlt wird, zentral mittig zwischen zwei Teillampen 31 zweiter Art angeordnet ist. Die Entladungsgefäße 31 können dabei selbstverständlich beliebige Formen aufweisen, und beispielsweise drei oder vier Schenkel, wie bei herkömmlichen Kompaktlampen, umfassen.

Ein äußeres, den Kolben 11 und die Teillampen 31 gemeinsam umhüllendes Element, wie es bei dem Ausführungsbeispiel gemäß Fig. 3 das Kolbenelement 11 ist, kann beim Ausführungsbeispiel gemäß Fig. 4 entfallen. Es kann jedoch beispielsweise noch ein weiteres, in Fig. 4 nicht dargestelltes, zusätzliches Diffusorelement vorgesehen sein.

## Patentansprüche

1. Lampe (10) mit ein- oder zweiseitiger Sockelung, wobei an dem wenigstens einen Sockel (12) ein ein Raumvolumen (14) im wesentlichen umhüllendes Kolbenelement (11) angeordnet ist, und wobei der Lampe wenigstens ein LED-Element (13) zugeordnet ist, **dadurch gekennzeichnet, dass** eine Einstrahlung des LED-Lichtes in das Kolbenelement hinein erfolgt und auf Grund von Reflexion, insbesondere Totalreflexion, an Begrenzungsflächen (16, 17) des Kolbenelementes eine Weiterleitung des LED-Lichtes innerhalb des Kolbenelementes stattfindet.

2. Lampe nach Anspruch 1, **dadurch gekennzeichnet, dass** innerhalb des Raumvolumens (14) eine Teillampe (31) zweiter Art angeordnet ist.

3. Lampe nach Anspruch 2, **dadurch gekennzeichnet, dass** die Teillampe (31) zweiter Art als Kompakt-Leuchtstofflampe ausgebildet ist.

4. Lampe nach einem der Ansprüche 1 bis 3, **dadurch gekennzeichnet, dass** eine Teillampe (31) zweiter Art vorgesehen ist, die im wesentlichen die gleiche Farbtemperatur besitzt wie das LED-Element (13).

5. Lampe nach einem der vorangegangenen Ansprüche, **dadurch gekennzeichnet, dass** das Kolbenelement (11) ausschließlich gekrümmte, weitestgehend kantenlose Begrenzungsflächen (16, 17) aufweist.

6. Lampe nach einem der vorangegangenen Ansprüche, **dadurch gekennzeichnet, dass** das Kolbenelement (11) Öffnungen, insbesondere Entlüftungsöffnungen, aufweist.

7. Lampe nach einem der Ansprüche 1 bis 5, **dadurch gekennzeichnet, dass** das Raumvolumen (14) von dem Kolbenelement (11) und dem wenigstens einen Sockel (12) gemeinsam vollständig umschlossen ist.

8. Lampe nach einem der vorangegangenen Ansprüche, dass wenigstens ein LED-Element (13) im dem wenigstens einen Sockel (12) der Lampe angeordnet ist.

9. Lampe nach einem der vorangegangenen Ansprüche, **dadurch gekennzeichnet, dass** das Kolbenelement an den wenigstens einen Sockel über einen Befestigungsbereich (28) angebunden ist und das wenigstens eine LED-Element nahe dem Befestigungsbereich angeordnet ist.

10. Lampe nach einem der vorangegangenen Ansprüche, **dadurch gekennzeichnet, dass** mehrere LED-Elemente (13) vorgesehen sind, die im Bereich des Randes des wenigstens einen Sockels angeordnet ind.

11. Lampe nach einem der vorangegangenen Ansprüche, **dadurch gekennzeichnet, dass** mehrere LED-Elemente (13) vorgesehen sind, die in Umfangsrichtung verteilt, insbesondere kreisringförmig, an dem Sockel angeordnet sind.

12. Lampe nach einem der vorangegangenen Ansprüche, **dadurch gekennzeichnet, dass** mehrere LED-Elemente (13) vorgesehen sind, die unterschiedliche Farben umfassen.

13. Lampe nach einem der vorangegangenen Ansprüche, **dadurch gekennzeichnet, dass** zusätzlich zu dem Kolbenelement (11) ein Diffusorelement vorgesehen ist.

14. Lampe nach einem der vorangegangenen Ansprüche, **dadurch gekennzeichnet, dass** das Kolbenelement (11) eine innere, dem Raumvolumen (14) benachbarte Begrenzungsfläche (16) und eine äußere, dem Außenraum benachbarte Begrenzungsfläche (17) aufweist, wobei die innere und die äußere Begrenzungsfläche zumindest teilweise im Raum gekrümmt sind.

15. Lampe nach einem der vorangegangenen Ansprüche, **dadurch gekennzeichnet, dass** die Weiterleitung des LED-Lichtes innerhalb des Kolbenelementes (11) entlang der Begrenzungsflächen (16, 17) erfolgt, insbesondere weitgehend durch Totalreflexion an den beiden Begrenzungsflächen.

16. Lampe nach einem der vorangegangenen Ansprüche, **dadurch gekennzeichnet, dass** das Kolbenelement (11) im wesentlichen hohl ausgebildet ist, wobei zwei gesonderte Konstruktionselemente die innere und die äußere Begrenzungsfläche bilden.

17. Lampe nach einem der vorangegangenen Ansprüche, **dadurch gekennzeichnet, dass** eine innere und/ oder eine äußere Begrenzungsfläche (16, 17) des Kolbenelementes (11) mit einer Leuchtstoffschicht (32) versehen ist, die von dem LED-Licht, insbesondere von LED-Strahlung, die im kurzwelligen UV-Bereich liegt, angeregt wird.

18. Lampe nach einem der vorangegangenen Ansprüche, **dadurch gekennzeichnet, dass** die Lampe (10) wenigstens einen Sockel (12) üblicher Bauform aufweist.

19. Lampe nach einem der vorangegangenen Ansprüche, **dadurch gekennzeichnet, dass** das Kolbenelement (11) aus Kunststoff besteht.

20. Lampe nach Anspruch 19, **dadurch gekennzeichnet, dass** der Kunststoff Streukörper enthält.

21. Lampe nach Anspruch 20, **dadurch gekennzeichnet, dass** das Kolbenelement als Kunststoff-Sprüzgußteil ausgebildet ist, und die Streukörper dem Kunststoff-Granulat vor dem Spritzgießen beigemischt sind.

22. Lampe nach Anspruch 20, **dadurch gekennzeichnet, dass** das Kolbenelement als Kunststoff-Spritzgußteil ausgebildet ist, und die Streukörper Bestandteil des Kunststoff-Granulates sind.

23. Lampe nach einem der Ansprüche 20 bis 22, **dadurch gekennzeichnet, dass** die Streukörper aus Leuchtstoff bestehen.

24. Lampe nach Anspruch 23, **dadurch gekennzeichnet, dass** der Leuchtstoff UV-Lichtanteile, insbesondere die im blauen oder langwelligen UV-Bereich liegenden Emissionen (z.B. Hg-Linien einer Teillampe (31) zweiter Art) und/oder die von den LED-Elementen (13) emittierte langwellige UV-Strahlung in sichtbares Licht konvertiert.

## Claims

1. Lamp (10) having a base at one or two ends, a bulb element (11) which essentially envelops a physical volume (14) being arranged on the at least one base (12), and the lamp having at least one associated LED element (13), **characterized in that** the LED light is irradiated into the bulb element, and, owing to reflection, in particular total reflection, at the limit faces (16, 17) of the bulb element, the LED light is passed on within the bulb element.

2. Lamp according to Claim 1, **characterized in that** a lamp element (31) of the second type is arranged within the physical volume (14).

3. Lamp according to Claim 2, **characterized in that** the lamp element (31) of the second type is in the form of a compact fluorescent lamp.

4. Lamp according to one of Claims 1 to 3, **characterized in that** a lamp element (31) of the second type is provided which has essentially the same color temperature as the LED element (13).

5. Lamp according to one of the preceding claims, **characterized in that** the bulb element (11) has exclusively curved limit faces (16, 17) which have largely no edges.

6. Lamp according to one of the preceding claims, **characterized in that** the bulb element (11) has openings, in particular ventilation openings.

7. Lamp according to one of Claims 1 to 5, **characterized in that** the physical volume (14) is completely enclosed jointly by the bulb element (11) and the at least one base (12).

8. Lamp according to one of the preceding claims, **characterized in that** at least one LED element (13) is arranged in the at least one base (12) of the lamp.

9. Lamp according to one of the preceding claims, **characterized in that** the bulb element is connected to the at least one base via a fixing region (28), and the at least one LED element is arranged close to the fixing region.

10. Lamp according to one of the preceding claims, **characterized in that** two or more LED elements (13) are provided which are arranged in the region of the edge of the at least one base.

11. Lamp according to one of the preceding claims, **characterized in that** two or more LED elements (13) are provided which are arranged on the base such that they are distributed in the circumferential direction, in particular in the form of a circular ring.

12. Lamp according to one of the preceding claims, **characterized in that** two or more LED elements (13) are provided which comprise different colors.

13. Lamp according to one of the preceding claims, **characterized in that** a diffuser element is provided in addition to the bulb element (11).

14. Lamp according to one of the preceding claims, **characterized in that** the bulb element (11) has an inner limit face (16) which is adjacent to the physical volume (14) and an outer limit face (17) which is adjacent to the exterior, the inner and the outer limit faces being at least partially curved.

15. Lamp according to one of the preceding claims, **characterized in that** the LED light is passed on within the bulb element (11) along the limit faces (16, 17), in particular largely owing to total reflection on the two limit faces.

16. Lamp according to one of the preceding claims, **characterized in that** the bulb element (11) is essentially hollow, two separate structural elements forming the inner and the outer limit faces.

17. Lamp according to one of the preceding claims, **characterized in that** an inner and/or an outer limit face (16, 17) of the bulb element (11) is provided with a fluorescent layer (32), which is stimulated by the LED light, in particular LED radiation which is in the short-wave UV range.

18. Lamp according to one of the preceding claims, **characterized in that** the lamp (10) has at least one base (12) having a conventional physical shape.

19. Lamp according to one of the preceding claims, **characterized in that** the bulb element (11) is made of plastic.

20. Lamp according to Claim 19, **characterized in that** the plastic contains diffusers.

21. Lamp according to Claim 20, **characterized in that** the bulb element is in the form of a plastic injection-molded part, and the diffusers are mixed in with the plastic granulate prior to injection molding.

22. Lamp according to Claim 20, **characterized in that** the bulb element is in the form of a plastic injection-molded part, and the diffusers are part of the plastic granulate.

23. Lamp according to one of Claims 20 to 22, **characterized in that** the diffusers are made of fluorescent material.

24. Lamp according to Claim 23, **characterized in that** the fluorescent material converts UV light components, in particular the emissions in the blue or long-wave UV range (for example Hg lines of a lamp element (31) of the second type) and/or the long-wave UV radiation emitted by the LED elements (13), into visible light.

## Revendications

1. Lampe ( 10 ) ayant un culot d'un côté ou des deux côtés, un élément ( 11 ) d'ampoule, entourant essentiellement un volume ( 14 ) d'espace, étant disposé sur le au moins un culot ( 12 ) et au moins un élément ( 13 ) de DEL étant associé à la lampe **caractérisée en ce qu'**une entrée de la lumière de la DEL s'effectue dans l'élément d'ampoule et, en raison de la réflexion, notamment de la réflexion totale sur des surfaces ( 16, 17 ) de démarcation de l'élément d'ampoule, la lumière de la DEL continue son chemin à l'intérieur de l'élément d'ampoule.

2. Lampe suivant la revendication 1, **caractérisée en ce qu'**à l'intérieur du volume ( 14 ) d'espace est disposée une sous lampe ( 31 ) d'un deuxième type.

3. Lampe suivant la revendication 2, **caractérisée en ce que** la sous lampe ( 31 ) du deuxième type est constituée sous la forme d'une lampe fluorescente compacte.

4. Lampe suivant l'une des revendications 1 à 3, **caractérisée en ce qu'**il est prévu une sous lampe ( 31 ) d'un deuxième type, qui a sensiblement la même température de couleur que l'élément ( 13 ) de DEL.

5. Lampe suivant l'une des revendications précédentes, **caractérisée en ce que** l'élément ( 11 ) d'ampoule a des surfaces ( 16, 17 ) de démarcation exclusivement courbées dans une très grande mesure sans arête.

6. Lampe suivant l'une des revendications précédentes, **caractérisée en ce que** l'élément ( 11 ) d'ampoule a des ouvertures, notamment des ouvertures d'aération.

7. Lampe suivant l'une des revendications 1 à 5, **caractérisée en ce que** le volume ( 14 ) d'espace est enfermé complètement conjointement par l'élément ( 11 ) d'ampoule et par le au moins un culot ( 12 ).

8. Lampe suivant l'une des revendications précédentes, **caractérisée en ce qu'**au moins un élément ( 13 ) de DEL est disposé dans le au moins un culot ( 12 ) de la lampe.

9. Lampe suivant l'une des revendications précédentes, **caractérisée en ce que** l'élément d'ampoule est relié au au moins un culot par une zone ( 28 ) de fixation et le au moins un élément de DEL est disposé près de la zone de fixation.

10. Lampe suivant l'une des revendications précédentes, **caractérisée en ce qu'**il est prévu plusieurs éléments ( 13 ) de DEL qui sont disposés dans la zone du bord du au moins un culot.

11. Lampe suivant l'une des revendications précédentes, **caractérisée en ce qu'**il est prévu plusieurs éléments ( 13 ) de DEL qui sont répartis dans la direction périphérique, notamment sous la forme d'un anneau de cercle sur le culot.

12. Lampe suivant l'une des revendications précédentes, **caractérisée en ce qu'**il est prévu plusieurs éléments ( 13 ) de DEL qui comprennent des couleurs différentes.

13. Lampe suivant l'une des revendications précédentes, **caractérisée en ce qu'**il est prévu un élément de diffuseur en plus de l'élément ( 11 ) d'ampoule.

14. Lampe suivant l'une des revendications précédentes, **caractérisée en ce que** l'élément ( 11 ) d'ampoule a une surface ( 16 ) de démarcation intérieure proche du volume ( 14 ) d'espace et une surface ( 17 ) de démarcation extérieure proche de l'espace extérieur, la surface de démarcation intérieure et la surface de démarcation extérieure étant courbées au moins en partie dans l'espace.

15. Lampe suivant l'une des revendications précédentes, **caractérisée en ce que** la lumière de la DEL poursuit son chemin à l'intérieur de l'élément ( 11 ) d'ampoule le long des surfaces ( 16, 17 ) de démarcation, notamment dans une grande mesure par réflexion totale sur les deux surfaces de démarcation.

16. Lampe suivant l'une des revendications précédentes, **caractérisée en ce que** l'élément ( 11 ) d'ampoule est sensiblement creux, deux éléments de construction distincts formant la surface de démarcation intérieure et la surface de démarcation extérieure.

17. Lampe suivant l'une des revendications précédentes, **caractérisée en ce qu'**une surface ( 16, 17 ) de démarcation intérieure et/ou de démarcation extérieure de l'élément ( 11) d'ampoule est munie d'une couche ( 32 ) de substance luminescente qui est excitée par la lumière de la DEL, notamment par le rayonnement de DEL qui est dans le domaine UV de courtes longueurs d'onde.

18. Lampe suivant l'une des revendications précédentes, **caractérisée en ce que** la lampe ( 10 ) a au moins un culot ( 12 ) de forme habituelle.

19. Lampe suivant l'une des revendications précédentes, **caractérisée en ce que** l'élément ( 11 ) d'ampoule est en matière plastique.

20. Lampe suivant la revendication 19, **caractérisée en ce que** la matière plastique contient des corps de dispersion.

21. Lampe suivant la revendication 20, **caractérisée en ce que** l'élément d'ampoule est constitué sous la forme d'une pièce moulée par injection en matière plastique et les corps de dispersion sont mélangés au granulé de matière plastique avant le moulage par injection.

22. Lampe suivant la revendication 20, **caractérisée en ce que** l'élément d'ampoule est constitué sous la forme d'une pièce moulée par injection en matière plastique et les corps de dispersion font partie du granulé de matière plastique.

23. Lampe suivant l'une des revendications 20 à 22, **caractérisée en ce que** les corps de dispersion sont en une substance luminescente.

24. Lampe suivant la revendication 23, **caractérisée en ce que** la substance luminescente transforme en de la lumière visible des composantes de lumière UV, notamment les émissions se trouvant dans le domaine UV bleu ou de grandes longueurs d'onde ( par exemple, des raies d'Hg d'une sous-lampe ( 31 ) d'un deuxième type ) et/ou le rayonnement UV de grandes longueurs d'onde émis par les éléments ( 13 ) de DEL.
